# EUROPÄISCHE PATENTSCHRIFT

(11) **EP 3 872 264 B1**
(45) Veröffentlichungstag und Bekanntmachung des Hinweises auf die Patenterteilung: **07.06.2023**
(21) Anmeldenummer: 20160017.8
(22) Anmeldetag: 28.02.2020
(51) Int. Cl.: C02F 9/00, E01H 1/10, B01D 29/27, B01D 29/56, B01D 33/06, B01D 35/26, C02F 1/00, B01D 36/02, B01D 24/10, C02F 1/38

(54) **MOBILE FILTEREINRICHTUNG UND VERFAHREN ZUM FILTERN VON VERUNREINIGTER FLÜSSIGKEIT**
MOBILE FILTERING DEVICE AND METHOD FOR FILTERING CONTAMINATED LIQUID
DISPOSITIF FILTRANT MOBILE ET PROCÉDÉ DE FILTRAGE D'UN LIQUIDE CONTAMINÉ

(43) Veröffentlichungstag der Anmeldung: 01.09.2021
(73) Patentinhaber: Sandmaster Gesellschaft für Spielsandpflege und Umwelthygiene mbH, 73240 Wendlingen (DE)
(72) Erfinder: Mayer-Klenk, Christoph, 70199 Stuttgart (DE)
(74) Vertreter: Patentanwälte Ruff, Wilhelm, Beier, Dauster & Partner mbB

(56) Entgegenhaltungen:
- WO-A1-97/23264
- CN-A- 110 302 567
- KR-A- 20150 071 616
- US-A- 5 543 063

## Beschreibung

### ANWENDUNGSGEBIET UND STAND DER TECHNIK

Die Erfindung betrifft eine mobile Filtereinrichtung und ein Verfahren zum Filtern von verunreinigter Flüssigkeit. Die Verunreinigungen sind kleine und kleinste Partikel wie beispielsweise Kunststoffrückstände oder Granulat, beispielsweise aus Verfüllungen in einem Kunstrasen eines Sportplatzes.

Aus der EP 3382101 A2 ist ein Reinigungsanhänger bzw. Reinigungsfahrzeug bekannt, mit dem Plätze mit Kunstrasen gereinigt werden können. Mittels Wasserstrahlen werden Verschmutzungen herausgespült und samt dem Wasser aufgesaugt und gesammelt. Dieses Wasser enthält viele Schmutzpartikel, unter anderem aus Kunststoff, welche von dem im Kunstrasen üblicherweise vorhandenen Granulat stammt. Dieses stark verschmutzte Wasser sollte nicht einfach direkt ins Abwasser gegeben werden.

Aus der US 5,543,063 ist eine Waschanlage für Fahrzeuge bekannt, bei der das Abwasser gereinigt werden soll. Das von dem Fahrzeug herabfließende Wasser wird zuerst durch ein Gitter am Einlass in einen Vorratstank grob gefiltert. Mittels einer dem Vorratstank nachgeschalteten Pumpe wird Flüssigkeit durch eine Leitung in einen zweiten Tank gepumpt. Eine weitere Pumpe pumpt Flüssigkeit aus dem zweiten Tank in einen Zyklon-Filter, wobei das so gefilterte Wasser wieder in den zweiten Tank zurück gepumpt wird. Des weiteren sind Beutel-Filter vorgesehen, die beim Rückspülen eines weiteren Filters unterstützen, der vom Zyklon-Filter ausgefiltertes Filtrat nochmals filtert.

Aus der KR 2015 0071616 A ist eine mobile Filtereinrichtung auf einem Fahrzeug bekannt. Damit soll explizit Luft im Bereich einer Baustelle gereinigt werden, wozu mehrere Filter verwendet werden, unter anderem ein Zyklon-Filter und mehrere Beutel-Filter. Das Filtern erfolgt in mehreren Stufen durch die vorgesehenen Filter.

Aus der WO 97/23264 A1 ist eine mobile Filtereinrichtung auf einem Fahrzeug bekannt, mit der eine Flüssigkeit gefiltert werden kann. Hierfür sind mehrere unterschiedliche Filter vorgesehen, unter anderem wird eine Zentrifuge ähnlich dem erfindungsgemäßen Zyklon-Filter verwendet. Eine erste Filterung erfolgt durch Drahtgitter-Filter, eine zweite Filterung erfolgt mittels Beutel-Filtern. Dahinter wird die vorgefilterte Flüssigkeit durch die Zentrifuge nochmals gefiltert.

Aus der CN 110 302 567 A ist eine Filtereinrichtung bekannt mit einem Tank und einer Mischervorrichtung darin. In dem Tank befindet sich auch ein Filtermaterial, wobei sich die Mischervorrichtung durch das Filtermaterial hindurch bewegen kann. Dem Tank ist ein Zyklon-Filter vorgeschaltet.

### AUFGABE UND LÖSUNG

Der Erfindung liegt die Aufgabe zugrunde, eine eingangs genannte Filtereinrichtung sowie ein entsprechendes Verfahren zum Filtern von verunreinigter Flüssigkeit bzw. Wasser zu schaffen, mit denen Probleme des Standes der Technik gelöst werden können und es insbesondere möglich ist, von Schmutzpartikel aus verunreinigter Flüssigkeit möglichst einfach und möglichst vollständig entfernen zu können.

Gelöst wird diese Aufgabe durch eine mobile Filtereinrichtung mit den Merkmalen des Anspruchs 1 sowie durch ein Verfahren zum Filtern mit einer solchen Reinigungsvorrichtung mit den Merkmalen des Anspruchs 12. Vorteilhafte sowie bevorzugte Ausgestaltungen der Erfindung sind Gegenstand der weiteren Ansprüche und werden im Folgenden näher erläutert. Dabei werden manche der Merkmale nur für die mobile Filtereinrichtung oder nur das Verfahren zum Filtern beschrieben. Sie sollen jedoch unabhängig davon sowohl für eine mobile Filtereinrichtung als auch für ein Verfahren zum Filtern unabhängig voneinander und selbstständig gelten können. Der Wortlaut der Ansprüche wird durch ausdrückliche Bezugnahme zum Inhalt der Beschreibung gemacht.

Die mobile Filtereinrichtung für zu filternde, verunreinigte Flüssigkeit bzw. Wasser weist ein Fahrwerk auf, an und/oder auf dem Funktionseinheiten der Filtereinrichtung angeordnet sind.

Vorteilhaft sind sämtliche Funktionseinheiten der Filtereinrichtung daran bzw. darauf angeordnet. Es ist ein Zufuhr-Anschluss zum Anschluss der Filtereinrichtung an eine Versorgung mit der zu filternden Flüssigkeit vorgesehen, insbesondere an ein vorgenanntes Reinigungsfahrzeug. Zum Filtern der verschmutzten Flüssigkeit bzw. des Wassers ist dem Zufuhr-Anschluss ein Grob-Filter nachgeschaltet. Dieser soll grobe bzw. große Schmutzpartikel zurückhalten. Es sind mindestens zwei Beutel-Filter mit unterschiedlichen Maschenweiten von Filtermaschen der Beutel-Filter vorgesehen, die untereinander in Reihe geschaltet sind, also einer nach dem anderen, und dem Grob-Filter nachgeschaltet sind. Vorteilhaft ist dem Zufuhr-Anschluss ein weiterer externer-Filter vorgeschaltet, besonders vorteilhaft angeordnet in einem Reinigungsfahrzeug, das einen Tank aufweist für das zu reinigende Schmutzwasser. Das Schmutzwasser stammt von einem Reinigungsvorgang und enthält alle Verschmutzungen und Partikel, die aus der zu reinigenden Bodenfläche, beispielsweise einem Kunstrasen eines Sportplatzes, geholt worden sind. Der externe Filter kann einen Filtergrad aufweisen, so dass nur Partikel unterhalb einer Größe von 1,5 mm hindurchgelassen werden.

Außerdem ist dem Zufuhr-Anschluss ein Zyklon-Filter nachgeschaltet, insbesondere auch dem Grob-Filter, der dazu ausgebildet ist mittels Verwirbelung und seitlichem Auswerfen Verunreinigungen bzw. Schmutzpartikel aus der Flüssigkeit herauszufiltern. Dem Zyklon-Filter ist ein Sicker-Filter nachgeschaltet, der noch ganz kleine Schmutzpartikel herausfiltern kann. Es ist noch ein Abwasser-Anschluss vorgesehen zum Anschluss der Filtereinrichtung an eine Abwasseranlage zum Auslassen der gefilterten bzw. gereinigten Flüssigkeit in die Abwasseranlage, also an eine Kläranlage odgl.. Außerdem ist auch noch eine Pumpe vorgesehen, die zwischen dem Zufuhr-Anschluss und dem Abwasser-Anschluss angeordnet ist.

Somit kann mittels der verschiedenen Filter eine besonders gute und gründliche Filterung von verunreinigter Flüssigkeit erreicht werden. Die Filter können dazu unterschiedlich angeordnet werden. Es kann auch vorgesehen sein, dass manche der Filter überbrückt werden können, die zu reinigende Flüssigkeit also an dem Filter vorbeigeleitet wird. Dies kann erfolgen, wenn ein bestimmter Filtergrad nicht notwendig ist. So kann beispielsweise einer der Beutel-Filter überbrückt bzw. ausgelassen werden.

Vorteilhaft ist die Pumpe eine Saugpumpe, so dass sie das verunreinigte Wasser ansaugen kann, möglicherweise auch durch mindestens einen Filter hindurch, vorteilhaft durch den Grob-Filter hindurch ansaugen kann. Die Pumpe kann dem Grob-Filter direkt nachgeschaltet sein, so dass sie das Wasser gut durch ihn hindurchsaugen kann. Der Grob-Filter kann also vorteilhaft als Saug-Filter ausgebildet sein. Er kann für eine maximale Partikelgröße von 400 µm als Durchlass ausgebildet sein, größere Partikel werden also darin zurückgehalten und somit herausgefiltert. In dem Grob-Filter herausgefilterte Verunreinigungen können ggf. direkt als Filtrat und weitgehend ohne Flüssigkeit daraus entnommen werden. Ein solches Filtrat kann zu mindestens 90% aus Verunreinigungen bestehen. Somit muss hiermit nicht viel Wasser entnommen werden. Insbesondere können der Saugpumpe die Beutel-Filter direkt nachgeschaltet sein, so dass das Wasser durch sie mit Druck hindurchgepumpt wird. Somit können die übrigen Filter der Filtereinrichtung als Druck-Filter ausgebildet sein.

Besonders vorteilhaft können die Beutel-Filter als Filterkerzen ausgebildet sein. Sie sind also aufrecht stehend angeordnet und können parallel nebeneinander angebracht werden. Die Beutel können auf bekannte Art und Weise entnommen und entsorgt werden anstelle einer Reinigung der Filter wie mit Rückspülen odgl..

Es können bevorzugt drei Beutel-Filter mit jeweils unterschiedlichen Maschenweiten von Filtermaschen der Beutel-Filter vorgesehen sein, wodurch eine feine stufenweise Filterung erreicht werden kann. Die Beutel-Filter sind besonders bevorzugt mit abnehmender Maschenweite hintereinander entlang der Flussrichtung des verunreinigten Wassers angeordnet.

Dabei kann vorgesehen sein, dass der erste dem Grob-Filter, ggf. auch der Pumpe, nachgeschaltete Beutel-Filter eine Maschenweite zwischen 200 µm und 50 µm aufweist, vorzugsweise maximal 100 µm aufweist. Dies kann eine gute Filterung nach dem vorgeschalteten Grob-Filter ergeben.

Der dem Grob-Filter und dem ersten Beutel-Filter nachgeschaltete zweite Beutel-Filter kann eine Maschenweite zwischen 100 µm und 20 µm aufweisen, vorzugsweise maximal 50 µm. Dies kann dann in etwa die halbe Maschenweite des ersten Beutel-Filters sein.

Vorteilhaft kann dem Grob-Filter und dem ersten und dem zweiten Beutel-Filter ein dritter Beutel-Filter nachgeschaltet sein, der eine Maschenweite bzw. einen Filtergrad zwischen 20 µm und 10 µm aufweisen kann, vorzugsweise maximal 5 µm. Dies ist noch einmal deutlich geringer als beim zweiten Beutel-Filter.

Der erste Beutel-Filter kann bevorzugt als Nylonfilter ausgebildet sein, besonders bevorzugt auch der zweite Beutel-Filter. Die entsprechenden Filter-Beutel bzw. Filterstrümpfe bestehen also aus Nylon bzw. sind daraus gewebt.

Ein letzter Beutel-Filter der in Reihe geschalteten Beutel-Filter, insbesondere ein vorgenannter dritter Beutel-Filter, ist vorteilhaft ein Filzfilter. Dadurch ist die nochmals deutlich geringere Maschenweite bzw. der stark verbesserte Filtergrad möglich.

Bei der Erfindung ist der Sicker-Filter ein sogenannter Sandfilter, der von oben zugänglich ausgebildet ist. Dazu weist er einen abnehmbaren Deckel auf. Zum Reinigen des Sicker-Filters werden nach dessen Öffnen von oben angesammelte Verunreinigungen und ein Teil des Filtermaterials des Sicker-Filters entnommen, beispielsweise also der Sand im oberen Bereich, vorzugsweise mindestens der oberen 5%. Dort ist der größte Teil der herausgefilterten Verunreinigungen zu erwarten. In ähnlicher Form sollte dann die zu filternde Flüssigkeit von oben auf den Sand aufgebracht werden.

Es kann vorgesehen sein, dass der Zyklon-Filter den Beutel-Filtern nachgeschaltet ist, vorzugsweise direkt nachgeschaltet. Insbesondere ist der Zyklon-Filter derart ausgebildet, Partikel bis zu einer Partikelgröße von 1 µm aus der Flüssigkeit herauszufiltern. Dies ermöglicht eine nochmals deutlich feinere Filterung als mit den Beutel-Filtern.

Das Fahrwerk der Filtereinrichtung weist bevorzugt eine Zugeinrichtung auf, insbesondere eine Anhängerkupplung. So kann sie beispielsweise ohne eigenen Antrieb ausgebildet sein, insbesondere von dem Reinigungsfahrzeug gezogen werden. Eine Versorgung mit Energie bzw. Strom kann auch von dem Reinigungsfahrzeug kommen. Das Fahrwerk weist vorteilhaft mindestens zwei Räder auf, also mindestens eine Achse. Besonders vorteilhaft weist es zwei Achsen auf.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränken die unter diesen gemachten Aussagen nicht in ihrer Allgemeingültigkeit.

### KURZBESCHREIBUNG DER ZEICHNUNGEN

Ausführungsbeispiele der Erfindung sind in den Zeichnungen schematisch dargestellt und werden im Folgenden näher erläutert. In den Zeichnungen zeigen:
- Fig. 1: eine Art Blockschaltbild eines Aufbaus der erfindungsgemäßen mobilen Filtereinrichtung,
- Fig. 2: eine Schrägdarstellung einer konkreten Anordnung von Funktionseinheiten mit mehreren unterschiedlichen Filtern für die Filtereinrichtung aus Fig. 1,
- Fig. 3: eine Draufsicht auf eine Filtereinrichtung entsprechend Fig. 2 und
- Fig. 4: eine stark vereinfachte Darstellung einer mobilen Filtereinrichtung, die mit einem Reinigungsfahrzeug per Schlauch verbunden ist.

### DETAILLIERTE BESCHREIBUNG DER AUSFÜHRUNGSBEISPIELE

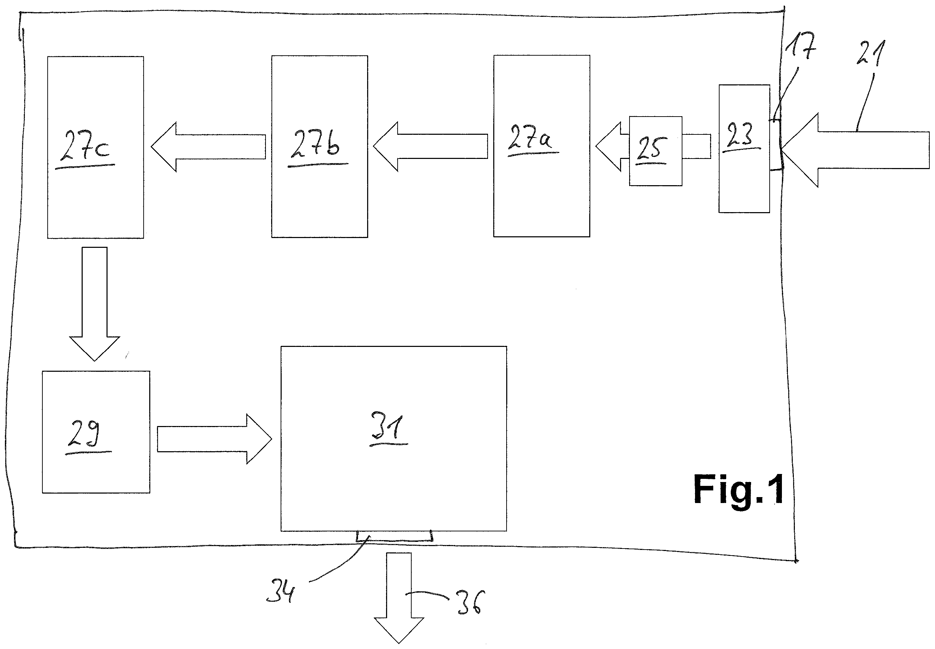

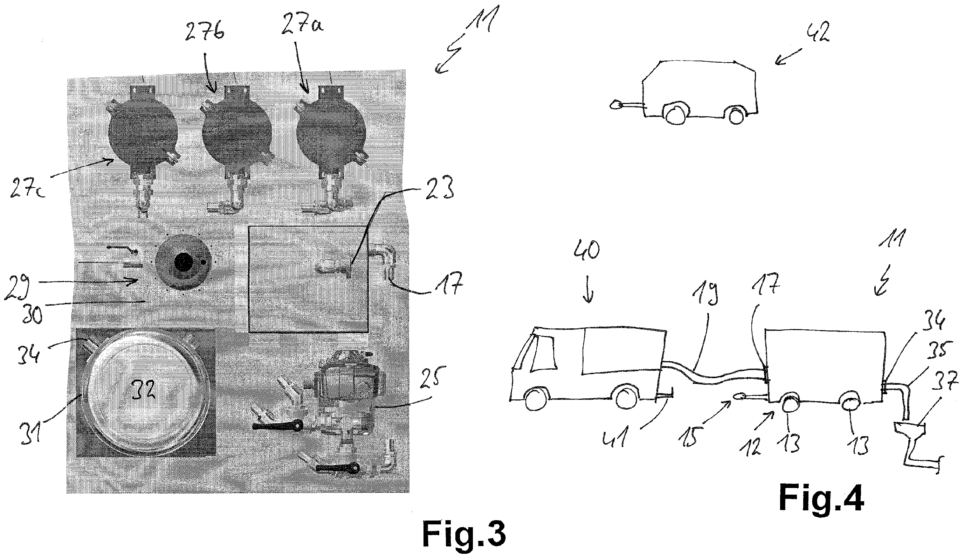

In der Fig. 1 ist ein Blockschaltbild einer erfindungsgemäßen mobilen Filtereinrichtung 11 dargestellt, hier ist sozusagen die gesamte Filtereinrichtung mit einem Kasten umrahmt. Sie entspricht dem anhängerartigen Fahrzeug aus Fig. 4.

Der Filtereinrichtung 11 wird zu filternde Flüssigkeit, die stark verunreinigt ist, insbesondere nach einem zuvor beschriebenen Reinigungsverfahren eines Kunstrasenplatzes, zugeführt, vorteilhaft per Schlauch 19 an einen Zufuhr-Anschluss 17 entsprechend Fig. 4. Dem Zufuhr-Anschluss 17 ist ein Grob-Filter 23 nachgeschaltet, der hier als sogenannter Saugfilter ausgebildet ist. Dies bedeutet, dass die zu filternde bzw. zu reinigende Flüssigkeit 21 durch den Grob-Filter 23 durchgesaugt wird. Der Grob-Filter 23 ist hier ein Metallsieb-Filter. Er ist vorteilhaft so ausgebildet, dass in der aus ihm herausgesaugten Flüssigkeit Partikel mit einer maximalen Partikelgröße von 400 µm enthalten sind. Größere Partikel werden also herausgefiltert bzw. gesiebt. Für das Saugen ist eine nachgeschaltete Saugpumpe 25 vorgesehen. Somit kann die Flüssigkeit 21 auch durch den gesamten Schlauch 19 aus einem entsprechenden Tank des Reinigungsfahrzeugs 40 angesaugt werden und braucht dort nicht herausgepumpt zu werden. Die Saugpumpe 25 kann auf unterschiedliche Art und Weise ausgebildet sein, vorteilhaft ist es eine Impellerpumpe mit einem Verbrennungsmotor, insbesondere einem Benzinmotor. Alternativ könnte es ein Elektromotor sein, der aber einen stationären Netzanschluss in der Nähe des Kunstrasenplatzes benötigen würde. An dem genannten Tank des Reinigungsfahrzeugs 40 bzw. an einem Auslass aus dem Tank kann ein eingangs genannter Filter vorgesehen sein, vorteilhaft als Sieb, besonders vorteilhaft als Metallsieb. Dieser Filter ist hier nicht dargestellt, er ist auch nicht Teil der Filtereinrichtung 11, er ist ihr vorgeschaltet, müsste also quasi vor dem Pfeil 21 dargestellt sein.

Die Saugpumpe 25 pumpt die grob gereinigte bzw. grob gefilterte Flüssigkeit in einen ersten Beutel-Filter 27a. Der erste Beutel-Filter 27a ist als ein Nylonfilter mit Beuteln oder Filterstrümpfen aus Nylon ausgebildet. Deren Filtergrad bzw. Maschenweite ist so, dass Partikel mit einer maximalen Größe von 100 µm in der gefilterten Flüssigkeit enthalten sein können.

Diese gefilterte Flüssigkeit geht in einen zweiten Beutel-Filter 27b. Auch er ist vorteilhaft als Nylonfilter mit Beuteln bzw. Filterstrümpfen aus Nylongewebe ausgebildet. Sein Filtergrad bzw. eine Maschenweite ist so, dass in der aus ihm austretenden Flüssigkeit Partikel mit einer maximalen Größe von 50 µm enthalten sind.

Die zu filternde Flüssigkeit geht dann in einen dritten Beutel-Filter 27c. Dieser ist grundsätzlich ähnlich ausgebildet, allerdings als sogenannter Filzfilter. Er filtert somit nicht mittels eines Beutels aus Nylon bzw. Nylongewebe, sondern aus Filz. Dadurch kann er noch feiner filtern. Der Filtergrad ist hier so ausgebildet, dass in der den dritten Beutel-Filter 27c verlassenden Flüssigkeit Partikel mit einer maximalen Größe von 10 µm oder nur von 5 µm enthalten sind.

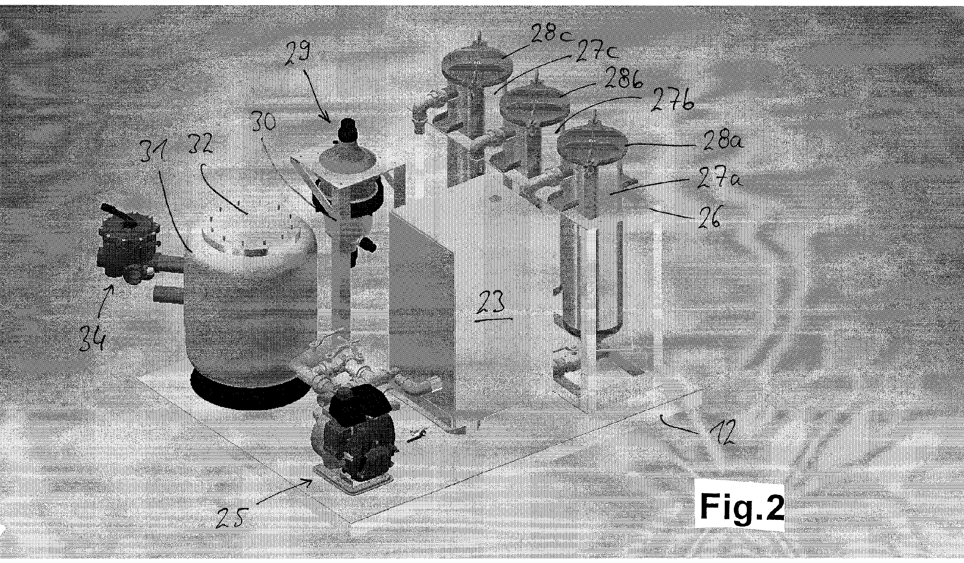

Als nächstes tritt die Flüssigkeit in einen Zyklon-Filter 29 ein. Dieser arbeitet auf übliche Art und Weise und wird durch die Flüssigkeitsströmung selbst angetrieben bzw. betrieben. Der Zyklon-Filter 29 ist so ausgebildet, dass in der aus ihm austretenden Flüssigkeit Partikel mit einer maximalen Größe von 1 µm enthalten sind. Die Flüssigkeit tritt dann in den Sicker-Filter 31 ein, der hier als Sandfilter ausgebildet ist bzw. mit Sand gefüllt ist. Aus dem Sicker-Filter 31 kann gereinigte bzw. gefilterte Flüssigkeit zu einem Abwasser-Anschluss 34 austreten. Gemäß Fig. 2 kann dieser natürlich mit einem Ventil bzw. einem Verschluss versehen sein. Das am Abwasser-Anschluss 34 austretende Abwasser 36 ist nun sauber gefiltert und kann problemlos direkt in eine Abwasseranlage 37 entsprechend Fig. 4 abgelassen werden, vorteilhaft mittels eines Abwasser-Schlauchs 35.

In der Fig. 2 ist eine Schrägansicht der Anordnung der Filter aus Fig. 1 dargestellt mit einem vereinfachten Fahrwerk 12, an welchem allerdings keine Räder 13 entsprechend Fig. 4 dargestellt sind. Aus der Fig. 2 ist zu ersehen, dass an einem Gestell 26 die drei Beutel-Filter 27a bis 27c aufrecht stehend angeordnet sind samt Anschlussrohren bzw. Leitungen. Jeder der Beutel-Filter 27a bis 27c weist einen eigenen Deckel 28a bis 28c auf. Nach Entfernen der Deckel 28a bis 28c kann der jeweilige Filterbeutel entnommen werden und gereinigt werden oder entsorgt werden samt den darin zurückgehaltenen Verunreinigungen bzw. Partikeln. Gerade die Beutel der Beutel-Filter 27a und 27b können bevorzugt dazu vorgesehen sein, dass sie nach Entnehmen entleert und dann wieder verwendet werden können. Dies geht noch bei den hier herausgefilterten größeren Partikeln. Der Beutel des Beutel-Filters 27c kann zum Entsorgen vorgesehen sein, da die sehr kleinen Partikel nur schwer aus dem Beutel gelöst werden können. Vor allem ist es schwierig, sie aus dem Filz zu lösen.

Der Grob-Filter 23 kann zur Reinigung entweder rückgespült werden. Alternativ und vorteilhaft kann darin gesammeltes Filtrat bzw. darin gesammelte Verunreinigungen oder Partikel separat als eine Art Schlamm oder Filterkuchen entfernt werden.

Der Zyklon-Filter 29 trennt Verunreinigungen bzw. Partikel während seines Betriebs laufend ab. Sie können an einem separaten Auslass in einem Filtrat-Behälter gesammelt werden, der dann separat entsorgt wird. Der Zyklon-Filter 29 ist etwas erhöht an einem Gestell 30 angeordnet, um darunter ausreichend Platz zu lassen für einen genannten Filtrat-Behälter.

Der Sicker-Filter 31 wird dadurch gereinigt, dass der Deckel 32 entfernt werden kann und dann oben bzw. im oberen Bereich eine entsprechende Menge an Sand entfernt wird im Fall eines Sand-Filters als Sicker-Filter. Eine entsprechende Menge an sauberem Sand wird dann nachgefüllt. Dies ist an sich aus dem Stand der Technik bekannt.

Aus der Draufsicht der Fig. 3 auf die Filtereinrichtung 11 ist zu erkennen, dass der Bauraum des Fahrwerks relativ gut ausgenutzt wird. Gleichzeitig können die Filter noch gut gewartet werden. Eine flüssigkeitsleitende Verbindung zwischen den einzelnen Filtern ist bei den Fig. 2 und 3 der Übersichtlichkeit halber nicht dargestellt. Es ist jedoch leicht vorstellbar, wie hier entsprechende Rohre oder Leitungen verlaufen.

In der Fig. 4 ist noch dargestellt, wie die mobile Filtereinrichtung 11 als eine Art zweiachsiger Anhänger mit einer Zugeinrichtung 15 abgestellt ist. Ein Reinigungsfahrzeug 40, beispielsweise ähnlich der US 7290307 B1, ist davor geparkt. Es weist eine Anhängerkupplung 41 auf, um die mobile Filtereinrichtung 11 bewegen zu können. Des Weiteren weist es einen internen Tank auf, von dem aus ein Schlauch 19 an den Zufuhr-Anschluss 17 der Filtereinrichtung 11 angeschlossen ist. Am gegenüberliegenden Ende ist die Filtereinrichtung 11 am Abwasser-Anschluss 34 mittels eines Abwasser-Schlauchs 35 mit einer Abwasseranlage 37 verbunden, um das saubere gefilterte Wasser aus dem Tank des Reinigungsfahrzeugs 40 abzulassen.

Auch dargestellt ist ein Reinigungsanhänger 42, der ausgebildet sein kann wie in der EP 3382101 A2 beschrieben. Die benutzte Flüssigkeit zum Reinigen beispielsweise eines Kunstrasenplatzes ist in einem genannten Tank des Reinigungsfahrzeugs 40 gesammelt worden während des Reinigungsverfahrens. Sie wird dann durch Anschluss an die mobile Filtereinrichtung 11 gereinigt und in die Abwasseranlage 37 abgelassen.

In weiterer Ausgestaltung der Erfindung ist leicht vorstellbar, dass an der mobilen Filtereinrichtung 11 noch ein eigener Tank vorgesehen ist. In diesen könnte das Reinigungsfahrzeug 40 das verschmutzte Wasser des Reinigungsverfahrens hineinpumpen in kurzer Zeit, um dann wieder mit dem Reinigungsanhänger 42 das Reinigungsverfahren fortzuführen. In der Zwischenzeit könnte das Wasser aus dem Tank durch die Filtereinrichtung 11 gereinigt werden. Dann müsste das Reinigungsfahrzeug 40 nicht auf den Vorgang des Filterns warten.

## Patentansprüche

1. Mobile Filtereinrichtung (11) für zu filternde, verunreinigte Flüssigkeit (21), wobei die mobile Filtereinrichtung (11) aufweist:
- ein Fahrwerk (12), an und/oder auf dem Funktionseinheiten der Filtereinrichtung (11) angeordnet sind,
- einen Zufuhr-Anschluss (17) zum Anschluss der Filtereinrichtung (11) an eine Versorgung mit der zu filternden Flüssigkeit (21),
- einen Grob-Filter (23), der dem Zufuhr-Anschluss (17) nachgeschaltet ist,
- mindestens zwei Beutel-Filter (27a-c) mit unterschiedlichen Maschenweiten von Filtermaschen der Beutel-Filter (27a-c), die untereinander in Reihe geschaltet sind und dem Grob-Filter (23) nachgeschaltet sind,
- einen Zyklon-Filter (29), der dem Zufuhr-Anschluss (17) nachgeschaltet ist, und der dazu ausgebildet ist mittels einer Verwirbelung und seitlichem Auswerfen Verunreinigungen aus der Flüssigkeit (21) herauszufiltern,
- einen Sicker-Filter (31) dem Zyklon-Filter (29) nachgeschaltet ist,
- einen Abwasser-Anschluss (34) zum Anschluss der Filtereinrichtung (11) an eine Abwasseranlage (37) zum Auslassen der gefilterten Flüssigkeit in die Abwasseranlage (37),
- eine Pumpe (25), die zwischen dem Zufuhr-Anschluss (17) und dem Abwasser-Anschluss (34) angeordnet ist,
**dadurch gekennzeichnet, dass** der Sicker-Filter (31) ein Sandfilter ist, wobei der Sandfilter (31) von oben zugänglich ist mittels eines abnehmbaren Deckels (32), um oben angesammelte Verschmutzungen zu entfernen.

2. Filtereinrichtung nach Anspruch 1, **dadurch gekennzeichnet, dass** die Pumpe (25) eine Saugpumpe ist und dem Grob-Filter (23) direkt nachgeschaltet ist, wobei insbesondere der Saugpumpe (25) die Beutel-Filter (27a-c) direkt nachgeschaltet sind.

3. Filtereinrichtung nach Anspruch 1 oder 2, **dadurch gekennzeichnet, dass** der Grob-Filter (23) als Saug-Filter ausgebildet ist, wobei vorzugsweise die übrigen Filter (27a-c, 31) der Filtereinrichtung (11) als Druck-Filter ausgebildet sind.

4. Filtereinrichtung nach einem der vorhergehenden Ansprüche, **dadurch gekennzeichnet, dass** die Beutel-Filter (27a-c) als Filterkerzen ausgebildet sind.

5. Filtereinrichtung nach einem der vorhergehenden Ansprüche, **dadurch gekennzeichnet, dass** drei Beutel-Filter (27a-c) mit jeweils unterschiedlichen Maschenweiten von Filtermaschen der Beutel-Filter (27a-c) vorgesehen sind, wobei vorzugsweise die Beutel-Filter (27a-c) mit abnehmender Maschenweite hintereinander entlang der Flussrichtung angeordnet sind.

6. Filtereinrichtung nach einem der vorhergehenden Ansprüche, **dadurch gekennzeichnet, dass** der zuerst dem Grob-Filter (23) nachgeschaltete Beutel-Filter (27a) eine Maschenweite zwischen 200 µm und 50 µm aufweist, vorzugsweise maximal 100 µm.

7. Filtereinrichtung nach einem der vorhergehenden Ansprüche, **dadurch gekennzeichnet, dass** der dem Grob-Filter (23) und dem ersten Beutel-Filter (27a) nachgeschaltete zweite Beutel-Filter (27b) eine Maschenweite zwischen 100 µm und 20 µm aufweist, vorzugsweise maximal 50 µm.

8. Filtereinrichtung nach einem der vorhergehenden Ansprüche, **dadurch gekennzeichnet, dass** ein dritter dem Grob-Filter (23) und dem ersten und dem zweiten Beutel-Filter (27a, b) nachgeschalteter Beutel-Filter (27c) eine Maschenweite zwischen 20 µm und 10 µm aufweist, vorzugsweise maximal 5 µm.

9. Filtereinrichtung nach einem der vorhergehenden Ansprüche, **dadurch gekennzeichnet, dass** der erste Beutel-Filter (27a), vorzugsweise auch der zweite Beutel-Filter (27b), als Nylonfilter ausgebildet sind.

10. Filtereinrichtung nach einem der vorhergehenden Ansprüche, **dadurch gekennzeichnet, dass** der letzte Beutel-Filter (27c) der in Reihe geschalteten Beutel-Filter (27a-c) ein Filzfilter ist.

11. Filtereinrichtung nach einem der vorhergehenden Ansprüche, **dadurch gekennzeichnet, dass** der Zyklon-Filter (29) den Beutel-Filtern (27a-c) nachgeschaltet ist, wobei vorzugsweise der Zyklon-Filter (29) derart ausgebildet ist, Partikel bis zu einer Partikelgröße von 1 µm aus der Flüssigkeit (21) herauszufiltern.

12. Verfahren zum Filtern von verunreinigter Flüssigkeit, insbesondere zum Filtern von verunreinigter Flüssigkeit (21) aus einem Reinigungsverfahren von Bodenuntergründen wie Sand oder Kunstrasen, mit den folgenden Schritten:
- zu filternde Flüssigkeit (27) wird in eine mobile Filtereinrichtung (11) gegeben oder eingespeist, vorzugsweise von einem Flüssigkeitsspeicher eines Reinigungsfahrzeugs (40) für das Reinigungsverfahren,
- die zu filternde Flüssigkeit (27) wird in einem vorausgehenden Schritt in einem Grob-Filter (23) grob gefiltert,
- hinter dem Grob-Filter (23) wird die grob gefilterte Flüssigkeit in hintereinander geschaltete Beutel-Filter (27a-c) geleitet und durch diese hindurch geleitet,
- hinter den Beutel-Filtern (27a-c) wird die Flüssigkeit in einen Zyklon-Filter (29) geleitet,
- hinter dem Zyklon-Filter (29) wird die Flüssigkeit in einen Sicker-Filter (31) geleitet,
- im Sicker-Filter (31) gefilterte Flüssigkeit wird nach außen abgeleitet in eine Abwasseranlage (37),
**dadurch gekennzeichnet, dass** zum Reinigen des Sicker-Filters (31) von oben angesammelte Verunreinigungen und ein Teil des Filtermaterials des Sicker-Filters (31) entnommen werden, wobei der Sicker-Filter (31) ein Sandfilter ist.

13. Verfahren nach Anspruch 12, **dadurch gekennzeichnet, dass** in dem Grob-Filter (23) herausgefilterte Verunreinigungen direkt als Filtrat und weitgehend ohne Flüssigkeit entnommen werden, wobei das Filtrat zu mindestens 90% aus Verunreinigungen besteht.

## Claims

1. Mobile filter device (11) for contaminated liquid (21) to be filtered, the mobile filter device (11) having:
- a chassis (12) on which and/or on which functional units of the filter device (11) are arranged,
- a supply connection (17) for connecting the filter device (11) to a supply of the liquid (21) to be filtered,
- a coarse filter (23) arranged downstream of the supply connection (17),
- at least two bag filters (27a-c) with different mesh widths of filter meshes of the bag filters (27a-c), which are connected in series with each other and are connected downstream of the coarse filter (23),
- a cyclone filter (29) connected downstream of the feed connection (17) and designed to filter out debris from the liquid (21) by means of swirling and lateral ejection,
- a seepage filter (31) downstream of the cyclone filter (29),
- a waste water connection (34) for connecting the filter device (11) to a waste water plant (37) for discharging the filtered liquid into the waste water plant (37),
- a pump (25) arranged between the feed connection (17) and the waste water connection (34),
**characterized in that** the seepage filter (31) is a sand filter, the sand filter (31) being accessible from above by means of a removable cover (32) to remove debris accumulated above.

2. Filter device according to claim 1, **characterized in that** the pump (25) is a suction pump and is connected directly downstream of the coarse filter (23), wherein in particular the bag filters (27a-c) are connected directly downstream of the suction pump (25).

3. Filter device according to claim 1 or 2, **characterized in that** the coarse filter (23) is designed as a suction filter, the remaining filters (27a-c, 31) of the filter device (11) preferably being designed as pressure filters.

4. Filter device according to one of the preceding claims, **characterized in that** the bag filters (27a-c) are designed as filter cartridges.

5. Filter device according to one of the preceding claims, **characterized in that** three bag filters (27a-c) with respectively different mesh widths of filter meshes of the bag filters (27a-c) are provided, wherein preferably the bag filters (27a-c) with decreasing mesh width are arranged one behind the other along the flow direction.

6. Filter device according to one of the preceding claims, **characterized in that** the bag filter (27a) connected first downstream of the coarse filter (23) has a mesh width of between 200 µm and 50 µm, preferably a maximum of 100 µm.

7. Filter device according to one of the preceding claims, **characterized in that** the second bag filter (27b) downstream of the coarse filter (23) and the first bag filter (27a) has a mesh width between 100 µm and 20 µm, preferably a maximum of 50 µm.

8. Filter device according to one of the preceding claims, **characterized in that** a third bag filter (27c) downstream of the coarse filter (23) and the first and second bag filters (27a, b) has a mesh width between 20 µm and 10 µm, preferably a maximum of 5 µm.

9. Filter device according to one of the preceding claims, **characterized in that** the first bag filter (27a), preferably also the second bag filter (27b), are designed as nylon filters.

10. Filter device according to one of the preceding claims, **characterized in that** the last bag filter (27c) of the series-connected bag filters (27a-c) is a felt filter.

11. Filter device according to one of the preceding claims, **characterized in that** the cyclone filter (29) is connected downstream of the bag filters (27a-c), preferably the cyclone filter (29) being designed to filter particles up to a particle size of 1 µm out of the liquid (21).

12. Method for filtering contaminated liquid, in particular for filtering contaminated liquid (21) from a cleaning process of floor substrates such as sand or artificial turf, comprising the following steps:
- liquid (27) to be filtered is fed into a mobile filter device (11), preferably from a liquid reservoir of a cleaning vehicle (40) for the cleaning process,
- the liquid (27) to be filtered is coarsely filtered in a coarse filter (23) in a preceding step,
- downstream of the coarse filter (23), the coarsely filtered liquid is passed into and through bag filters (27a-c) connected in series,
- downstream of the bag filters (27a-c), the liquid is fed into a cyclone filter (29),
- downstream of the cyclone filter (29), the liquid is fed into a seepage filter (31),
- liquid filtered in the seepage filter (31) is discharged to the outside into a waste water system (37),
**characterized in that** impurities collected from above and part of the filter material of the seepage filter (31) are removed for cleaning the seepage filter (31), wherein the seepage filter (31) is a sand filter.

13. Method according to claim 12, **characterized in that** impurities filtered out in the coarse filter (23) are removed directly as filtrate and largely without liquid, the filtrate consisting of at least 90% impurities.

## Revendications

1. Un dispositif de filtration mobile (11) pour le liquide pollué (21) à filtrer, le dispositif de filtration mobile (11) présentant :
- un châssis (12) sur lequel sont disposées des unités fonctionnelles du dispositif de filtration (11),
- un raccord d'alimentation (17) pour raccorder le dispositif de filtration (11) à une alimentation en liquide à filtrer (21),
- un filtre grossier (23), qui est monté en aval du raccord d'alimentation (17),
- au moins deux filtres à poches (27a-c) avec des ouvertures de mailles différentes des filtres à poches (27a-c), qui sont montés en série entre eux et sont placés en aval du filtre grossier (23),
- un filtre cyclone (29), qui est monté en aval du raccord d'alimentation (17) et qui est conçu pour filtrer les impuretés du liquide (21) au moyen d'un tourbillonnement et d'une éjection latérale,
- un filtre de suintement (31) placé en aval du filtre cyclone (29),
- un raccord d'eaux usées (34) pour raccorder le dispositif de filtration (11) à une installation d'eaux usées (37) pour évacuer le liquide filtré dans l'installation d'eaux usées (37),
- une pompe (25) disposée entre le raccord d'alimentation (17) et le raccord d'eaux usées (34),
**caractérisé en ce que** le filtre de suintement (31) est un filtre à sable, le filtre à sable (31) étant accessible par le haut au moyen d'un couvercle amovible (32) afin d'éliminer les impuretés accumulées sur le dessus.

2. Dispositif de filtration selon la revendication 1, **caractérisé en ce que** la pompe (25) est une pompe aspirante et est montée directement en aval du filtre grossier (23), les filtres à poches (27a-c) étant notamment montés directement en aval de la pompe aspirante (25).

3. Dispositif de filtration selon la revendication 1 ou 2, **caractérisé en ce que** le filtre grossier (23) est conçu comme un filtre d'aspiration, les autres filtres (27a-c, 31) du dispositif de filtration (11) étant de préférence conçus comme des filtres de pression.

4. Dispositif de filtration selon l'une des revendications précédentes, **caractérisé en ce que** les filtres à poches (27a-c) sont réalisés sous forme de bougies filtrantes.

5. Dispositif de filtration selon l'une des revendications précédentes, **caractérisé en ce qu'**il est prévu trois filtres à poches (27a-c) ayant chacun des ouvertures de maille différentes des mailles de filtre des filtres à poches (27a-c), les filtres à poches (27a-c) étant de préférence disposés les uns derrière les autres dans le sens de l'écoulement avec des ouvertures de maille décroissantes.

6. Dispositif de filtration selon l'une des revendications précédentes, **caractérisé en ce que** le filtre à poches (27a) placé en premier lieu en aval du filtre grossier (23) présente une ouverture de maille comprise entre 200 µm et 50 µm, de préférence au maximum 100 µm.

7. Dispositif de filtration selon l'une des revendications précédentes, **caractérisé en ce que** le deuxième filtre à poche (27b) placé en aval du filtre grossier (23) et du premier filtre à poche (27a) présente une ouverture de maille comprise entre 100 µm et 20 µm, de préférence au maximum 50 µm.

8. Dispositif de filtration selon l'une des revendications précédentes, **caractérisé en ce qu'**un troisième filtre à poche (27c), placé en aval du filtre grossier (23) et des premier et deuxième filtres à poche (27a, b), présente une ouverture de maille comprise entre 20 µm et 10 µm, de préférence au maximum 5 µm.

9. Dispositif de filtration selon l'une des revendications précédentes, **caractérisé en ce que** le premier filtre à poche (27a), de préférence également le deuxième filtre à poche (27b), sont réalisés sous forme de filtres en nylon.

10. Dispositif de filtration selon l'une quelconque des revendications précédentes, **caractérisé en ce que** le dernier filtre à poche (27c) des filtres à poche (27a-c) montés en série est un filtre en feutre.

11. Dispositif de filtration selon l'une des revendications précédentes, **caractérisé en ce que** le filtre cyclone (29) est monté en aval des filtres à poches (27a-c), le filtre cyclone (29) étant de préférence configuré pour filtrer des particules jusqu'à une taille de particules de 1 µm dans le liquide (21).

12. Procédé pour filtrer un liquide pollué, en particulier pour filtrer un liquide pollué (21) provenant d'un procédé de nettoyage de sols tels que du sable ou du gazon artificiel, comprenant les étapes suivantes :
- le liquide à filtrer (27) est versé ou alimenté dans un dispositif de filtration mobile (11), de préférence à partir d'un réservoir de liquide d'un véhicule de nettoyage (40) pour le procédé de nettoyage,
- le liquide à filtrer (27) est grossièrement filtré dans un filtre grossier (23) au cours d'une étape précédente,
- en aval du filtre grossier (23), le liquide grossièrement filtré est dirigé vers des filtres à poches (27a-c) montés en série et passe à travers ceux-ci,
- en aval des filtres à poches (27a-c), le liquide est dirigé vers un filtre cyclone (29),
- après le filtre cyclone (29), le liquide est dirigé vers un filtre de drainage (31),
- le liquide filtré dans le filtre de drainage (31) est évacué vers l'extérieur dans une installation d'évacuation des eaux usées (37),
**caractérisé en ce que**, pour nettoyer le filtre de suintement (31), on retire les impuretés accumulées depuis le haut et une partie du matériau filtrant du filtre de suintement (31), le filtre de suintement (31) étant un filtre à sable.

13. Procédé selon la revendication 12, **caractérisé en ce que** les impuretés filtrées dans le filtre grossier (23) sont prélevées directement sous forme de filtrat et en grande partie sans liquide, le filtrat étant constitué d'au moins 90 % d'impuretés.
